(19) **Europäisches Patentamt**
**European Patent Office**
**Office européen des brevets**

(11) **EP 3 562 087 B1**

(12) **EUROPEAN PATENT SPECIFICATION**

(45) Date of publication and mention of the grant of the patent:
**06.01.2021 Bulletin 2021/01**

(51) Int Cl.:
***H04L 9/00*** *(2006.01)*

(21) Application number: **19153656.4**

(22) Date of filing: **25.01.2019**

(54) **HIGH-THROUGHPUT PRIVACY-FRIENDLY HARDWARE ASSISTED MACHINE LEARNING ON EDGE NODES**

DATENSCHUTZFREUNDLICHES HARDWARE-UNTERSTÜTZTES MASCHINENLERNEN MIT HOHEM DURCHSATZ AUF KANTENKNOTEN

APPRENTISSAGE MACHINE À HAUT DÉBIT ET CONFIDENTIEL ASSISTÉ PAR MATÉRIEL SUR DES NOEUDS DE BORD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2018 US 201815964536**

(43) Date of publication of application:
**30.10.2019 Bulletin 2019/44**

(73) Proprietor: **NXP B.V.**
**5656 AG Eindhoven (NL)**

(72) Inventors:
• **BOS, Joppe Willem**
  **5656 AG Eindhoven (NL)**
• **JOYE, Marc**
  **5656 AG Eindhoven (NL)**

(74) Representative: **Krott, Michel**
  **NXP Semiconductors**
  **Intellectual Property & Licensing**
  **High Tech Campus 60**
  **5656 AG Eindhoven (NL)**

(56) References cited:
**EP-A1- 3 270 321**

• **ANDREAS FISCHER ET AL: "Computation on Encrypted Data using Data Flow Authentication", ARXIV.ORG, CORNELL UNIVERSITY LIBRARY, 201 OLIN LIBRARY CORNELL UNIVERSITY ITHACA, NY 14853, 1 October 2017 (2017-10-01), XP080825137,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

Various exemplary embodiments disclosed herein relate generally to high-throughput privacy-friendly hardware assisted machine learning on edge nodes.

BACKGROUND

Machine learning is a technique which enables a wide range of applications such as forecasting or classification. However, in the current age of Internet of Things (IoT), where the gathered user-sensitive data is used as input to train the models used in such machine learning, privacy becomes an important topic. This means privacy for both the user, who is providing their data, as well as for the entity providing the machine learning model because they have invested a lot of time and effort to train this model and acquire the data needed to the model.

The technical article by A.Fischer et al., "Computation on Encrypted Data using Data Flow Authentication", ARXIV.ORG, Cornell University Library, 201 Olin Library Cornell University Ithaca, NY, 14853, 1 October 2017 (XP080825137) mentions the problem that encrypting data before sending it to the cloud protects it against hackers and malicious insiders, but requires the cloud to compute on encrypted data. Trusted (hardware) modules, e.g. secure enclaves like Intel's SGX, can very efficiently run entire programs in encrypted memory shielding it from the administrator's view. However, it has already been demonstrated that software vulnerabilities give an attacker ample opportunity to insert arbitrary code into programs, which code can then modify the data flow of the program and leak any secret in the program to an observer in the cloud va SGX side-channels. Since any larger program is rife with software vulnerabilities, it is not a good idea to outsource entire programs to an SGX enclave. - A secure alternative with a small trusted code base would be a fully homomorphic encryption. However, due to its high computational complexity, it is unlikely to be adopted in the near future. As a result, researchers have made several proposals for transforming programs to perform encrypted computations on less powerful encryption schemes. Yet, current approaches fail on programs that make control-flow decisions based on encrypted data. The technical article discloses the concept of data flow authentication (DFAuth). DFAuth prevents an adversary from arbitrarily deviating from the data flow of a program. Hence, an attacker cannot perform an attack as outlined before on SGX. This enables that all programs, even those including operations on control-flow decision variables, can be computed on encrypted data. DFAuth is implemented using a novel authenticated homomorphic encryption scheme, a Java bytecode-to-bytecode compiler producing fully executable programs, and SGX enclaves. DFAuth has been applied to an existing neural network that performs machine learning on sensitive medical data. The transformation yields a neural network with encrypted weights, which can be evaluated on encrypted inputs in less than a second.

EP 3 270 321 A1 discloses a computing unit for securely performing an operation on encrypted data in an Internet of Things (IoT) environment. The computing unit comprises a secure element, at least one processor and at least one memory, wherein the at least one memory contains instructions executable by the at least one processor such that the computing unit is operable to obtain encrypted data collected by a sensor provided in the IoT environment, pass the encrypted data to the secure element, requesting the secure element to decrypt the encrypted data and to perform an operation on the decrypted data, and obtain an encrypted or non-encrypted result of the operation from the secure element.

SUMMARY

The present invention provides an edge node device in an Internet of Things network according to the appended independent claim 1, and a method of evaluating an encrypted learning model according to the appended independent claim 10.

A summary of various exemplary embodiments is presented below. Some simplifications and omissions may be made in the following summary, which is intended to highlight and introduce some aspects of the various exemplary embodiments, but not to limit the scope of the invention. Detailed descriptions of an exemplary embodiment adequate to allow those of ordinary skill in the art to make and use the inventive concepts will follow in later sections.

Various embodiments relate to a device according to claim 1.

Various embodiments are described, wherein verification information is a signature and verifying the encrypted machine learning model output includes verifying the signature.

Various embodiments are described, wherein verification information is a signature and producing the verification information includes producing the signature.

Various embodiments are described, wherein verification information is a proof of work and verifying the encrypted machine learning model output includes verifying the prof of work is correct.

Various embodiments are described, wherein verification information is a proof of work and producing the verification information includes producing the proof of work.

Various embodiments are described, wherein the tamper resistant hardware stores a decryption key to decrypt outputs of the encrypted machine learning model.

Various embodiments are described, wherein received data is from an Internet of Things device.

Various embodiments are described, wherein the encrypted machine learning model is encrypted using homomorphic encryption.

Various embodiments are described, wherein the encrypted machine learning model is encrypted using somewhat homomorphic encryption.

Further various embodiments relate to a method according to claim 10.

Various embodiments are described, wherein verification information is a signature and verifying the encrypted machine learning model output includes verifying the signature.

Various embodiments are described, wherein verification information is a signature and producing the verification information includes producing the signature.

Various embodiments are described, wherein verification information is a proof of work and verifying the encrypted machine learning model output includes verifying the prof of work is correct.

Various embodiments are described, wherein verification information is a proof of work and producing the verification information includes producing the proof of work.

Various embodiments are described, wherein the tamper resistant hardware stores a decryption key to decrypt outputs of the encrypted machine learning model.

Various embodiments are described, wherein received data is from an Internet of Things device.

Various embodiments are described, wherein the encrypted machine learning model is encrypted using homomorphic encryption.

Various embodiments are described, wherein the encrypted machine learning model is encrypted using somewhat homomorphic encryption.

BRIEF DESCRIPTION OF THE DRAWINGS

In order to better understand various exemplary embodiments, reference is made to the accompanying drawings, wherein:

FIG. 1 illustrates a system including an edge node receiving data from an IoT device; and
FIG. 2 illustrates an exemplary hardware diagram for implementing either the encrypted machine learning model or the tamper resistant hardware.

To facilitate understanding, identical reference numerals have been used to designate elements having substantially the same or similar structure and/or substantially the same or similar function.

DETAILED DESCRIPTION

The description and drawings illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor(s) to furthering the art and are to be construed as being without limitation to such specifically recited examples and conditions. Additionally, the term, "or," as used herein, refers to a non-exclusive or (*i.e.,* and/or), unless otherwise indicated (*e.g.*, "or else" or "or in the alternative"). Also, the various embodiments described herein are not necessarily mutually exclusive, as some embodiments can be combined with one or more other embodiments to form new embodiments.

Machine learning is a technique which enables a wide range of applications such as forecasting or classification. However, in the current age of the Internet of Things, where the gathered user-sensitive data is used as input to train the machine learning models as well used in such machine learning models, privacy becomes an important topic. This means privacy for both the user, who is providing their data, as well as for the entity providing the machine learning model because this entity has invested a lot of time and effort to train their model and acquire the data needed to produce the model.

Enhancing the privacy behavior of such machine learning algorithms is not new. Most approaches focus on overcoming certain privacy problems or enhancing the performance of the machine learning operations in the cloud setting. In this setting, it is assumed that the generated data is provided by the user, or on behalf of the user by a device (such as an Internet of Things device); this data is subsequently transferred to the cloud in order to perform some computations on this data. Examples include forecasting (e.g., to determine a preference) or when using in a classification algorithm (e.g., in the context of medical data where one could predict to have a high risk at a certain disease). In this context, the user-data should be protected because this data may contain private and very sensitive information. The machine learning model, which is used as the main algorithm to compute the output, is often not considered to be sensitive or the cloud provider is assumed to be trusted. Examples of techniques which have been applied to increase security include homomorphic encryption or multi-party computation.

Embodiments will now be described that illustrate how to protect the machine learning model when it is used on an edge node in an Internet of Things (IoT) Network. These embodiments use a small tamper resistant hardware module to assist an encrypted machine learning model. This allows for high-throughput and low-latency evaluation of the machine learning model in order to compute, for instance, classifications while protecting both the privacy of the user generated data as well as the valuable data stored inside the machine learning model. This is accomplished because the encrypted machine learning model may be implemented on a faster and unsecure processor or processors.

In the edge computing environment, the data generated by the user, or by the Internet of Things device owned by the user, does not necessarily need to be protected, because by assumption it does not leave its own network. However, if the machine learning model is installed on such an edge node in order to provide very fast prediction or classification, then the machine learning model itself may require protection because it contains valuable information. The embodiments described herein provide a way of computing the outcome of the machine learning algorithm even when the machine learning model is protected using a small tamper resistant piece of hardware. This allows for high-throughput predictions and classifications in the setting of edge computing by using fast processors for the predictions and classifications.

The embodiments described herein combine the characteristics of a small tamper resistant piece of hardware in the edge node in a large Internet of Things network to protect the machine learning model used for (among others) fast and efficient classification and prediction in the network of the user. Another advantage, over for instance storing the model inside such a secure piece of hardware, is that this allows for easy and convenient replacement/upgrade of the model. Moreover, depending on the characteristics of the machine learning model, this approach lowers the size of the secure hardware needed and increases the throughput of the machine learning algorithm when the bandwidth to and the processing power of the secure element is restricted.

The embodiments described herein focus on enhancing the privacy of both the user and the owner of the machine learning model in a setting different as compared to the commonly considered cloud setting. It is assumed the machine learning model is transferred to an edge node in the Internet of Things network. Such edge computing has multiple advantages because it reduces the communication bandwidth needed between IoT devices and the cloud computing servers by performing analytics close to the source of the data. Moreover, it is assumed the machine learning model is static: hence, no training is done in real-time on the model installed on this edge node.

The embodiments described herein provide a fast and efficient solution to protect the machine learning model as well as the data generated by the Internet of Things device. Note that this latter property is satisfied "for free" when a machine learning model is used that is installed on such an edge node. In this scenario the user data simply never leaves its own network. If adversaries can eavesdrop on this network, then this data could even be encrypted with the public key of the owner of the machine learning model for additional security and privacy guarantees.

The weights used inside an artificial neural network can be the outcome of a long and sophisticated training algorithm on a large dataset which is exclusively owned or acquired by the machine model owner. The same observation holds for other machine learning algorithms. Hence, it is assumed that the machine learning model $\mathcal{M}$ is transfered to the edge node in a form such that the user cannot deduce any useful information about it. This is called the encryption of the machine learning model and is denoted by encrypt ($\mathcal{M}$). However, just providing this model in this state is insufficient. The encrypted machine learning model should be able to process date from a function of the user generated data. Let $f$ be a function which takes as input the output of an Internet of Things device, say $x$ in some set $\mathcal{I}_1$, and converts the data $x$ to a form which can be used as input by the encrypted machine learning model, say $\mathcal{I}_2$. Hence, the edge node is able to compute the (encrypted) output of the machine learning model encrypt ($\mathcal{M}$)($f(x)$), which maps values from $\mathcal{I}_2$ to the possibly encrypted output set $\mathcal{O}_1$, given access to the encrypted machine learning model encrypt ($\mathcal{M}$) and the Internet of Things device output $f(x)$.

In practice, the encryption used to represent the encrypted machine learning model encrypt ($\mathcal{M}$) can be based on a fully or somewhat homomorphic encryption scheme and the output function $f$ is the identity function: i.e. $\mathcal{I}_1$ is identical to $\mathcal{I}_2$ and $f(x) = x$ for all input values $x$. In this scenario, the edge node may compute the outcome of the machine learning model, but this result will be encrypted under the same key used to encrypt the model $\mathcal{M}$. Fully homomorphic encryption allows one to perform an arbitrary number of arithmetic operations on encrypted data. When using somewhat homomorphic encryption one can only do a limited number of arithmetic operations on encrypted data. When this exact number of arithmetic operations is fixed then one can optimize all parameters such that the performance is significantly better (compared to a fully homomorphic encryption scheme). Because the user of the Internet of Things device owned by the user has no access to this key it cannot be used directly by these Internet of Things devices.

The embodiments described herein overcome this problem by using a small tamper resistant piece of hardware that has enough memory to hold the private key of the machine model owner. This hardware will take encrypted messages as input from the set $\mathcal{O}_1$, use the decryption key $k$ to decrypt this message, and output the decrypted message. Hence, the tamper resistant hardware module should compute $g(y)$ for y $\in \mathcal{O}_1$ where

$$g: \mathcal{O}_1 \mapsto \mathcal{O}_2.$$

However, slightly more functionality is needed to make this secure because as presented a malicious user could simply ask this secure hardware to decrypt the entire encrypted model encrypt

$$(\mathcal{M}) \in \mathcal{O}_1,$$

which defeats the entire purpose of this approach.

One solution to this problem is to create a secure communication channel between the software computing the machine learning algorithm and the hardware module. This could be achieved by, for instance, signing the messages going to the hardware module. The hardware module checks the signatures and can in this way ensure the messages (decryption requests) are indeed coming from the software running the machine learning model.

Another solution is not to only provide the ciphertext to be decrypted, but also a proof of work. This allows the hardware module to verify that the machine learning module has been applied to the input data: i.e., this is a valid outcome based on some known inputs. This also ensures that decryption queries for the model itself are no longer possible. In both of these approaches verification information is created, either in the form of a signature or a proof of work.

One of the additional advantages of this approach is that it allows for an easy way to replace or upgrade the model. The owner of the model can simply push another encrypted version to the edge node. This is significantly more difficult when the machine learning model is installed inside the secure hardware.

Another advantage is that the memory requirement for the secure hardware is small: the memory needs sufficient space to hold the private key of the machine learning model owner. In practice this is likely to be significantly smaller as compared to the machine learning model itself. Moreover, this limits the total communication with the secure hardware, which in certain scenarios might be significantly lower compared to the communication within the unprotected processor implementing the encrypted machine learning model.

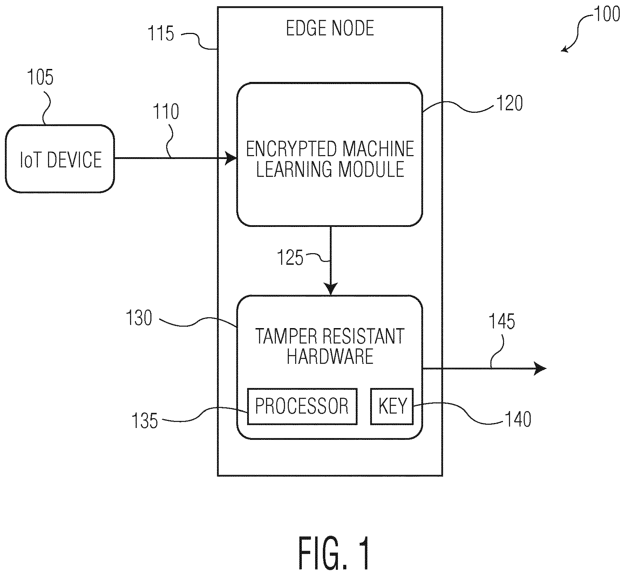

FIG. 1 illustrates a system including an edge node receiving data from an IoT device. The system 100 may include an IoT device 105 and an edge node 115. The IoT device produces data 110 that is sent to the edge node 115. The edge node 115 may include an encrypted machine learning model 120 and a tamper resistant hardware 130. The encrypted machine learning model 120 receives the data 110 from the IoT device 105. The encrypted machine learning model 120 then produces an encrypted ML output 125 that is sent to the tamper resistant hardware 135.

The encrypted ML output 125 may be sent using a secure channel where the encrypted ML output 125 is signed. The tamper resistant hardware 130 may then check the signed message and verify that the message is coming from the encrypted machine learning model 120 to prevent using the tamper resistant hardware 130 from unauthorized use. Alternatively, the ML output 125 may be sent together with a proof of work to verify that the machine learning module has been applied to the input data: i.e., this is a valid outcome based on some known inputs. These two approaches ensure that decryption queries for the model itself are no longer possible.

The tamper resistant hardware 130 includes a processor 135 and a key storage 140. The key storage 140 stores the key used to decrypt the encrypted machine learning model 120. The tamper resistant hardware 130 receives the encrypted ML output 125. The tamper resistant hardware 130 also receives verification, which may be for example either a signature or proof of work, that is used to verify the data received is valid. The tamper resistant hardware 130 verifies the signature or proof work, and then if verified, decrypts the encrypted ML output 130 and outputs the decrypted ML output 145. The processor 135 implements the verification and decryption of the encrypted ML output 125 using the decryption key stored in key storage 140.

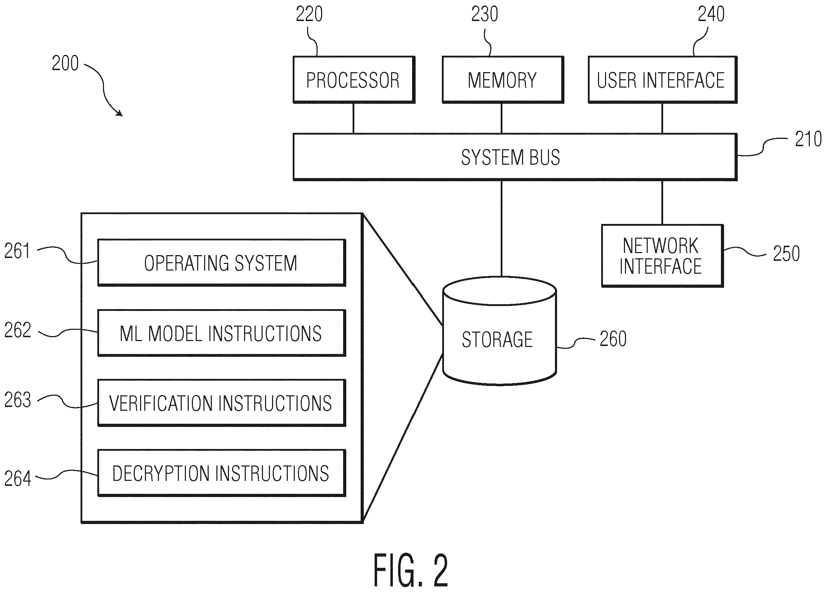

FIG. 2 illustrates an exemplary hardware diagram 200 for implementing either the encrypted machine learning model 120 or the tamper resistant hardware 130 described above. As shown, the device 200 includes a processor 220, memory 230, user interface 240, network interface 250, and storage 260 interconnected via one or more system buses 210. It will be understood that FIG. 2 constitutes, in some respects, an abstraction and that the actual organization of the components of the device 200 may be more complex than illustrated.

The processor 220 may be any hardware device capable of executing instructions stored in memory 230 or storage 260 or otherwise processing data. As such, the processor may include a microprocessor, field programmable gate array (FPGA), application-specific integrated circuit (ASIC), or other similar devices. For the tamper resistant hardware, the processor may tamper resistant.

The memory 230 may include various memories such as, for example L1, L2, or L3 cache or system memory. As such, the memory 230 may include static random-access memory (SRAM), dynamic RAM (DRAM), flash memory, read only memory (ROM), or other similar memory devices. Further, for the memory in the tamper resistant hardware, the memory may be secure memory that resists tampering.

The user interface 240 may include one or more devices for enabling communication with a user such as an administrator. For example, the user interface 240 may include a display, a mouse, and a keyboard for receiving user commands. In some embodiments, the user interface 240 may include a command line interface or graphical user interface that may be presented to a remote terminal via the network interface 250. In some embodiments, no user interface may be present.

The network interface 250 may include one or more devices for enabling communication with other hardware devices. For example, the network interface 250 may include a network interface card (NIC) configured to communicate according to the Ethernet protocol. Additionally, the network interface 250 may implement a TCP/IP stack for communication according to the TCP/IP protocols. Various alternative or additional hardware or configurations for the network interface 250 will be apparent.

The storage 260 may include one or more machine-readable storage media such as read-only memory (ROM), random-access memory (RAM), magnetic disk storage media, optical storage media, flash-memory devices, or similar storage media. In various embodiments, the storage 260 may store instructions for execution by the processor 220 or data upon with the processor 220 may operate. For example, the storage 260 may store a base operating system 261 for controlling various basic operations of the hardware 200. Further, software for the machine learning model, 262, verification 263, and decryption 264 may be stored in the memory, depending on whether it is the machine learning model 120 or the tamper resistant hardware 130. This software may implement the various embodiments described above.

It will be apparent that various information described as stored in the storage 260 may be additionally or alternatively stored in the memory 230. In this respect, the memory 230 may also be considered to constitute a "storage device" and the storage 260 may be considered a "memory." Various other arrangements will be apparent. Further, the memory 230 and storage 260 may both be considered to be "non-transitory machine-readable media." Further, this memory may be tamper resistant. As used herein, the term "non-transitory" will be understood to exclude transitory signals but to include all forms of storage, including both volatile and non-volatile memories.

While the host device 200 is shown as including one of each described component, the various components may be duplicated in various embodiments. For example, the processor 220 may include multiple microprocessors that are configured to independently execute the methods described herein or are configured to perform steps or subroutines of the methods described herein such that the multiple processors cooperate to achieve the functionality described herein.

Any combination of specific software running on a processor to implement the embodiments of the invention, constitute a specific dedicated machine. As used herein, the term "non-transitory machine-readable storage medium" will be understood to exclude a transitory propagation signal but to include all forms of volatile and non-volatile memory.

It should be appreciated by those skilled in the art that any block diagrams herein represent conceptual views of illustrative circuitry embodying the principles of the invention.

Although the various exemplary embodiments have been described in detail with particular reference to certain exemplary aspects thereof, it should be understood that the invention is capable of other embodiments and its details are capable of modifications in various obvious respects. As is clear to those skilled in the art, variations and modifications can be affected while remaining within the scope of the invention. Accordingly, the foregoing disclosure, description, and figures are for illustrative purposes only and do not in any way limit the invention, which is defined only by the claims.

**Claims**

1. An edge node device (115) in an Internet of Things, IoT, network, the device (115) comprising:

   - a memory;
   - a processor configured to implement an encrypted static machine learning model (120) configured to:

      o evaluate the encrypted static machine learning model (120) based upon received data to produce an encrypted static machine learning model output (125); and to produce verification information;

   - a tamper resistant hardware (130) configured to:

      o verify the encrypted static machine learning model output (125) based upon the verification information; and
      o decrypt the encrypted static machine learning model output (125) when the encrypted static machine learning model output (125) is verified.

2. The device (115) of claim 1, wherein verification information is a signature and verifying the encrypted static machine learning model output (125) includes verifying the signature.

3. The device (115) of claim 1 or 2, wherein verification information is a signature and producing the verification information includes producing the signature.

4. The device (115) of any preceding claim, wherein verification information is a proof of work and verifying the encrypted static machine learning model output (125) includes verifying the proof of work is correct.

5. The device (115) of any preceding claim, wherein verification information is a proof of work and producing the verification information includes producing the proof of work.

6. The device (115) of any preceding claim, wherein the tamper resistant hardware (130) stores a decryption key (140) to decrypt outputs (125) of the encrypted static machine learning model (120).

7. The device (115) of any preceding claim, wherein received data (110) is from an IoT device (105).

8. The device (115) of any preceding claim, wherein the encrypted static machine learning model (120) is encrypted using homomorphic encryption.

9. The device (115) of any preceding claim, wherein the encrypted static machine learning model (120) is encrypted using somewhat homomorphic encryption.

10. A method of evaluating an encrypted learning model (120) in an edge node device (115) in an Internet of Things, IoT, network, comprising:

evaluating, by a processor of the edge node device (115), the encrypted learning model (120) based upon received data (110) to produce an encrypted static machine learning model output and to produce verification information;
- verifying, by a tamper resistant hardware (130) of the edge node device (115), the encrypted static machine learning model output (125) based upon the verification information; and
- decrypting, by the tamper resistant hardware (130), the encrypted static machine learning model output (125) when the encrypted static machine learning model output (125) is verified.

11. The method of claim 10, wherein verification information is a signature and verifying the encrypted static machine learning model output (125) includes verifying the signature.

12. The method of claim 10 or 11, wherein verification information is a signature and producing the verification information includes producing the signature.

13. The method of any one of claims 10 to 12, wherein verification information is a proof of work and verifying the encrypted static machine learning model output (125) includes verifying the proof of work is correct.

14. The method of any one of claims 10 to 13, wherein verification information is a proof of work and producing the verification information includes producing the proof of work.

**Patentansprüche**

1. Kantenknotenvorrichtung (115) in einem IoT-Netz ("Internet of Things"), wobei die Vorrichtung (115) umfasst:

- einen Speicher;
- einen Prozessor, der dazu ausgelegt ist, ein verschlüsseltes statisches Maschinenlernmodell (120) zu implementieren, das dazu ausgelegt ist:

○ das verschlüsselte statische Maschinenlernmodell (120) basierend auf empfangenen Daten zu beurteilen, um eine verschlüsselte Ausgabe (125) des statischen Maschinenlernmodells zu erzeugen; und eine Verifikationsinformation zu erzeugen;

- eine manipulationssichere Hardware (130), die dazu ausgelegt ist:

○ die verschlüsselte Ausgabe (125) des statischen Maschinenlernmodells basierend auf der Verifikationsinformation zu verifizieren; und
○ die Ausgabe (125) des verschlüsselten statischen Maschinenlernmodells zu entschlüsseln, wenn die Ausgabe (125) des verschlüsselten statischen Maschinenlernmodells verifiziert ist.

2. Vorrichtung (115) nach Anspruch 1, wobei die Verifikationsinformation eine Signatur ist und das Verifizieren der verschlüsselten Ausgabe (125) des statischen Maschinenlernmodells das Verifizieren der Signatur beinhaltet.

3. Vorrichtung (115) nach Anspruch 1 oder 2, wobei die Verifikationsinformation eine Signatur ist und das Erzeugen der Verifikationsinformation das Erzeugen der Signatur beinhaltet.

4. Vorrichtung (115) nach einem der vorhergehenden Ansprüche, wobei die Verifikationsinformation ein Arbeitsnachweis ist und das Verifizieren der verschlüsselten Ausgabe (125) des statischen Maschinenlernmodells das Verifizieren der Richtigkeit des Arbeitsnachweises beinhaltet

5. Vorrichtung (115) nach einem der vorhergehenden Ansprüche, wobei die Verifikationsinformation ein Arbeitsnachweis ist und das Erzeugen der Verifikationsinformation das Erzeugen des Arbeitsnachweises beinhaltet.

6. Vorrichtung (115) nach einem der vorhergehenden Ansprüche, wobei die manipulationssichere Hardware (130) einen Entschlüsselungsschlüssel (140) speichert, um Ausgaben (125) des verschlüsselten statischen Maschinenlernmodells (120) zu entschlüsseln.

7. Vorrichtung (115) nach einem der vorhergehenden Ansprüche, wobei empfangene Daten (110) von einer IoT-Vorrichtung (105) stammen.

8. Vorrichtung (115) nach einem der vorhergehenden Ansprüche, wobei das verschlüsselte statische Maschinenlernmodell (120) mittels homomorpher Verschlüsselung verschlüsselt ist.

9. Vorrichtung (115) nach einem der vorhergehenden Ansprüche, wobei das verschlüsselte statische Maschinenlernmodell (120) mittels einigermaßen homomorpher Verschlüsselung verschlüsselt ist.

10. Verfahren zum Beurteilen eines verschlüsselten Lernmodells (120) in einer Kantenknotenvorrichtung (115) in einem IoT-Netz ("Internet of Things"), umfassend:

   - Beurteilen des verschlüsselten Lernmodells (120) basierend auf empfangenen Daten (110) durch einen Prozessor der Kantenknotenvorrichtung (115), um eine verschlüsselte statische Ausgabe des Maschinenlernmodells zu erzeugen und um eine Verifikationsinformation zu erzeugen;
   - Verifizieren der verschlüsselten Ausgabe (125) des statischen Maschinenlernmodells basierend auf der Verifikationsinformation durch eine manipulationssichere Hardware (130) der Kantenknotenvorrichtung (115); und
   - Entschlüsseln der verschlüsselten Ausgabe (125) des statischen Maschinenlernmodells durch die manipulationssichere Hardware (130), wenn die verschlüsselte Ausgabe (125) des statischen Maschinenlernmodells verifiziert ist.

11. Verfahren nach Anspruch 10, wobei die Verifikationsinformation eine Signatur ist und das Verifizieren der verschlüsselten statischen Ausgabe des Maschinenlernmodells (125) das Verifizieren der Signatur beinhaltet.

12. Verfahren nach Anspruch 10 oder 11, wobei die Verifikationsinformation eine Signatur ist und das Erzeugen der Verifikationsinformation das Erzeugen der Signatur beinhaltet.

13. Verfahren nach einem der Ansprüche 10 bis 12, wobei die Verifikationsinformation ein Arbeitsnachweis ist und das Verifizieren der verschlüsselten Ausgabe (125) des statischen Maschinenlernmodells das Verifizieren der Richtigkeit des Arbeitsnachweises beinhaltet.

14. Verfahren nach einem der Ansprüche 10 bis 13, wobei die Verifikationsinformation ein Arbeitsnachweis ist und das Erzeugen der Verifikationsinformation das Erzeugen des Arbeitsnachweises beinhaltet.

**Revendications**

1. Dispositif de nœud de bord (115) dans un réseau de l'Internet des objets, IOT, le dispositif (115) comprenant :

   - une mémoire ;
   - un processeur configuré pour mettre en œuvre un modèle d'apprentissage machine statique crypté (120) configuré pour :

      ∘ évaluer le modèle d'apprentissage machine statique crypté (120) en fonction de données reçues pour produire une sortie de modèle d'apprentissage machine statique crypté (125); et produire des informations de vérification ;

   - un matériel inviolable (130) configuré pour :

      ∘ vérifier la sortie de modèle d'apprentissage machine statique crypté (125) en fonction des informations de vérification ; et
      ∘ décrypter la sortie de modèle d'apprentissage machine statique crypté (125) quand la sortie de modèle d'apprentissage machine statique crypté (125) est vérifiée.

2. Dispositif (115) selon la revendication 1, dans lequel les informations de vérification sont une signature et la vérification de la sortie de modèle d'apprentissage machine statique crypté (125) comporte la vérification de la signature.

3. Dispositif (115) selon la revendication 1 ou 2, dans lequel les informations de vérification sont une signature et la production des informations de vérification comporte la production de la signature.

4. Dispositif (115) selon n'importe quelle revendication précédente, dans lequel les informations de vérification sont une preuve de travail et la vérification de la sortie de modèle d'apprentissage machine statique crypté (125) comporte la vérification que la preuve de travail est correcte.

5. Dispositif (115) selon n'importe quelle revendication précédente, dans lequel les informations de vérification sont une preuve de travail et la production des informations de vérification comporte la production de la preuve de travail.

6. Dispositif (115) selon n'importe quelle revendication précédente, dans lequel le matériel inviolable (130) stocke une clé de décryptage (140) pour décrypter des sorties (125) du modèle d'apprentissage machine statique crypté (120).

7. Dispositif (115) selon n'importe quelle revendication précédente, dans lequel des données reçues (110) proviennent d'un dispositif IOT (105).

8. Dispositif (115) selon n'importe quelle revendication précédente, dans lequel le modèle d'apprentissage machine statique crypté (120) est crypté à l'aide d'un cryptage homomorphe.

9. Dispositif (115) selon n'importe quelle revendication précédente, dans lequel le modèle d'apprentissage machine statique crypté (120) est crypté à l'aide d'un cryptage en partie homomorphe.

10. Procédé d'évaluation d'un modèle d'apprentissage crypté (120) dans un dispositif de nœud de bord (115) dans un réseau de l'Internet des objets, IOT, comprenant :

- l'évaluation, par un processeur du dispositif de nœud de bord (115), du modèle d'apprentissage crypté (120) en fonction de données reçues (110) pour produire une sortie de modèle d'apprentissage machine statique crypté et produire des informations de vérification ;
- la vérification, par un matériel inviolable (130) du dispositif de nœud de bord (115), de la sortie de modèle d'apprentissage machine statique crypté (125) en fonction des informations de vérification ; et
- le décryptage, par le matériel inviolable (130), de la sortie de modèle d'apprentissage machine statique crypté (125) quand la sortie de modèle d'apprentissage machine statique crypté (125) est vérifiée.

11. Procédé selon la revendication 10, dans lequel les informations de vérification sont une signature et la vérification de la sortie de modèle d'apprentissage machine statique crypté (125) comporte la vérification de la signature.

12. Procédé selon la revendication 10 ou 11, dans lequel les informations de vérification sont une signature et la production des informations de vérification comporte la production de la signature.

13. Procédé selon l'une quelconque des revendications 10 à 12, dans lequel les informations de vérification sont une preuve de travail et la vérification de la sortie de modèle d'apprentissage machine statique crypté (125) comporte la vérification que la preuve de travail est correcte.

14. Procédé selon l'une quelconque des revendications 10 à 13, dans lequel les informations de vérification sont une preuve de travail et la production des informations de vérification comporte la production de la preuve de travail.

FIG. 1

EP 3 562 087 B1

FIG. 2

EP 3 562 087 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3270321 A1

**Non-patent literature cited in the description**

- Computation on Encrypted Data using Data Flow Authentication. **A.FISCHER et al.** ARXIV.ORG. Cornell University Library, 01 October 2017